# EUROPEAN PATENT APPLICATION

(11) **EP 0 568 318 A1**
(43) Date of publication of application: **03.11.1993**
(21) Application number: 93303281.5
(22) Date of filing: 27.04.1993
(51) Int. Cl.: C08G 77/12, C08G 77/06

(54) **Trifunctional siloxane hydride fluids**

(30) Priority: 29.04.1992 US 875870; 22.07.1992 US 918823
(71) Applicant: GENERAL ELECTRIC COMPANY, Schenectady, NY 12345 (US)
(72) Inventor: Raleigh, William John, Rensselaer, New York 12144 (US); Lucarelli, Michael Anthony, Ballston Spa, New York 12020 (US)
(74) Representative: Pratt, Richard Wilson

(57) **Abstract**

There is disclosed a family of novel trifunctional branched siloxane hydride fluids and a process for their synthesis. The novel compositions are useful as crosslinking agents for vinyl organosiloxanes and as intermediates for the preparation of a variety of organo functional siloxanes.

## Description

The present invention relates to a process for the synthesis of trifunctional branched siloxane hydride fluids. More particularly the present invention relates to trifunctional branched siloxane hydride fluids and their use as crosslinking agents in the production of organosiloxanes.

### BACKGROUND OF THE INVENTION

The hydrosilation reaction was discovered in the 1940's and is now one of the best known and most widely practiced reactions in organosilicon chemistry, including use in a wide variety of large scale commercial applications. Various hydrosilation methods were known for effecting the addition of an organosilicon material, having a hydrogen atom attached to silicon, to an aliphatically unsaturated material having either olefinic or acetylenic unsaturation, resulting in the formation of an adduct having a new silicon-carbon linkage.

Prior to the present invention, in all of these hydrosilation methods, the hydrosilation methods were based on the use of linear silicone based hydride technology. See, Modic, United States Patent No. 3,457,214.

It has now been found that a new family of silicon hydrides for use in hydrosilation reactions have been found which exhibit many important new properties. These novel trifunctional branched siloxane hydride fluids may be used in a variety of crosslinking agents for a variety of SiH/SiCH-CH₂ platinum catalyzed reactions, as well as intermediates to produce a variety of organo functional silanes.

### SUMMARY OF THE PRESENT INVENTION

According to the present invention there is provided a trifunctional branched siloxane hydride fluid selected from those having the general formula:

TDₓM^{H}₃

TDₓD^{H}_{y}M^{H}₃

TDₓD^{H}_{y}M₃

wherein T represents an alkyl trisiloxy, D represents a dialkylsiloxy, D^{H} represents an alkylhydrodisiloxy, M represents a trialkylsiloxy, M^{H} represents a dialkylhydrosiloxy, and x and y are each individually an integer which is 1 or greater, and preferably vary from about 4 to about 200 and more preferably from about 10 to about 150.

According to the present invention there is also provided a process for preparing a trifunctional branched siloxane hydride selected from those having the general formulae: TDₓM^{H}₃, TDₓD^{H}_{y}M^{H}₃, or TDₓD^{H}_{y}M₃ wherein T represents an alkyl trisiloxy, D represents a dialkylsiloxy, D^{H} represents an alkylhydrodisiloxy, M represents a trialkylsiloxy, M^{H} represents a dialkylhydrosiloxy, and x and y are an integer which is 1 or greater, and preferably varies from about 10 to about 150 inclusive, compris ing: (a) adding a TD siloxane to a reaction vessel, wherein T and D are as above defined, (b) heating the reaction vessel to a temperature of from about 50 to about 150°C in the presence of a catalyst, (c) cooling and neutralizing the reaction mixture; and (d) recovering the trifunctional branched siloxane hydride product.

### DETAILED DESCRIPTION OF THE PRESENT INVENTION

The present invention discloses novel siloxane hydride fluids and a process for their synthesis. These novel siloxane hydride fluids are trifunctional branched siloxane fluids of the general formulae:

TDₓM^{H}₃

TDₓD^{H}_{y}M^{H}₃

TDₓD^{H}_{y}M₃

wherein T represents an alkyl trisiloxy, D represents a dialkylsiloxy , D^{H} represents an alkylhydrodisiloxy, M represents a trialkylsiloxy, M^{H} represents a dialkylhydrosiloxy, and x and y are each individually 1 or greater, and preferably vary from about 4 to about 200. In preferred embodiments, the alkyl group of the T, D, D^{H}, M and M^{H} components ccmprises methyl.

These novel trifunctional branched siloxane hydride fluids are formed by a process comprising (a) adding a TD siloxane to a reaction vessel, wherein T and D are as above defined, (b) heating the reaction vessel to a temperature of from about 50 to about 150°C in the presence of a catalyst, (c) cooling and neutralizing the reaction mixture; and (d) recovering the trifunctional branched siloxane hydride product.

The TD siloxane can be prepared by methods known to those skilled in the art, such as by the co- hydrolysis of an alkyltrichlorosilane with the corresponding dialkylchlorosilane. Preferably, the TD siloxane comprises from about 5 to about 25 weight percent T, and more preferably from about 7.25 to about 25 weight percent T, based on the total weight of the TD siloxane.

It is also contemplated as within the scope of the present invention, that a siloxane tetramer and/or a tetraalkyldisiloxane component, such as tetramethyldisiloxane, can be added to the reaction vessel with the TD siloxane. Further, other siloxanes, such as methyl hydride cyclics and hexamethylsiloxanes can also be added to the reaction mixture.

The catalyst which is employed in the reaction is an equilibration catalyst, and can be any of those known to persons of skill in the art. It is also within the scope of the present claims that the catalyst includes an acid clay, such as Filtrol® 20, from Harshaw Chemical Co., or carbon black and a mineral acid, such as sulfuric acid, and/or an organic acid. Typically, from about 0.1 to about 2.0 weight percent of equilibration catalyst based on the weight of the siloxane reactants is added to the reaction mixture.

The reaction is then carried out at a temperature of from about 50 to about 150°C, preferably about 100°C, for a time of from about 3 to about 5 hours. The reaction mixture is cooled to a temperature of about 50°C and neutralized by the addition of a neutralizing agent. Typically the neutralizing agent is a magnesium oxide, but may also comprise other basics. The cooled and neutralized mixture is then filtered, such as through Celite filter, to remove impurities.

By varying the amounts and types of siloxane reactants, the product trifunctional branched siloxane can be prepared having varying amounts of Dₓ and D^{H}_{y} units in the siloxane.

The trifunctional siloxane hydride fluids of the present invention are useful as crosslinking agents for a variety of silicon hydride/vinyl silicon platinum catalyzed reactions.

The curing reaction which takes place between the vinyl-functional polysiloxane and the SiH-containing crosslinking agent is an addition cure reaction, known as hydrosilation. The compositions of the present invention may be thermally cured by means of a platinum group metal catalyzed crosslinking reaction between the vinyl groups of the base polymer and the SiH reaction sites of the crosslinker.

Suitable hydrosilation catalysts to be employed in the present invention are known to persons skilled in the art and include transition group metal catalysts utilizing such precious metals as ruthenium rhodium palladium, osmium, iridium, copper and platinum, and complexes of these metals. Preferred are platinum metal catalysts. Examples of such hydrosilation catalysts are described in, inter alia, Lamoreaux, United States Patent No. 3,220,972; Karstedt, United States Patent Nos. 3,715,334; 3,775,452 and 3,814,730.

The compositions can also be utilized as intermediates to produce a variety of organo functional siloxanes following standard hydrosilation techniques. These include the production of RTV compositions formed by reacting the trifunctional branched siloxane hydride fluids with a linear organosiloxane polymer having hydroxyl terminal groups in the presence of a metal salt, chelate, organometallic compound as a crosslinking catalyst. See, e.g., Beers, United States Patent No., 4,257,933; Smith, United States Patent No., 4,490,500; and White, United States Patent No. 4,395,526.

### DESCRIPTION OF THE PREFERRED EMBODIMENTS

The following examples illustrate the present invention. They are not to be construed to limit the scope of the appended claims in any manner whatsoever.

### EXAMPLE 1

To a vessel equipped with a stirrer, thermometer and condenser are added the following siloxanes: 33.4 weight percent of TD siloxane (7.25% T); 49.1 weight percent tetramer, 8.7 weight percent methyl hydride cyclics and 8.8 weight percent of hexamethyldisiloxane. A platinum catalyst is then added along with 0.1 weight percent of sulfuric acid concentrate and 0.5 weight percent of carbon black. The mixture is then heated to 100°C for 3-5 hours, and then cooled to 50°C. 0.5 weight percent of magnesium oxide (MgO) is then charged to the vessel to neutralize, and the reaction mixture is filtered through Celite.

There is produced a trifunctional siloxane hydride fluid of the formula TD₃₀D^{H}₄M₃.

### EXAMPLE 2

The procedure of Example 1 is followed using 67.1 weight percent of TD siloxane (7.25% T), 18.3 weight percent of tetramer and 14.6 weight percent of tetramethyldisiloxane as the siloxanes; 0.1 weight percent of sulfuric acid, 0.5 weight percent of carbon black in the catalyst mixture; and 0.5 weight percent of MgO as the neutralizer.

There is produced a trifunctional siloxane hydride fluid of the formula TD₁₅M^{H}₃.

### EXAMPLE 3

The procedure of Example 1 is followed using 38.3 weight percent of TD siloxane (7.25% T), 52.8 weight percent of tetramer and 8.4 weight percent of tetramethyldisiloxane as the siloxanes; 0.1 weight percent of sulfuric acid and 0.5 weight percent of carbon black in the catalyst mixture; and 0.5 weight percent of MgO as the neutralizer.

There is produced a trifunctional siloxane hydride fluid of the formula TD₃₀M^{H}₃.

### EXAMPLE 4

The procedure of Example 1 is followed using 45.1 weight percent TD siloxane (7.25% T), 14.7 weight percent methyl hydride cyclics, 30.4 weight percent tetramer and 9.8 weight percent tetramethyldisiloxane as the siloxanes; 0.1 weight percent sulfuric acid and 0.5 weight percent carbon black in the catalyst mixture; and 0.5 weight percent MgO as the neutralizer.

There is produced a trifunctional siloxane fluid of the formula TD₂₀D^{H}₅M^{H}₃.

### EXAMPLE 5

The procedure of Example 1 is followed using: 8.95 weight percent TD (7.25 weight percent T); 88.4 weight percent tetramer, 1.95 weight percent tetramethyldisiloxane, 0.1 weight percent sulfuric acid, 0.3 weight percent carbon black and 0.3 weight percent MgO.

There is produced a trifunctional siloxane fluid of the formula TD₁₃₅M^{H}₃.

### EXAMPLE 6

The trifunctional siloxane hydride fluid of Example 1 is employed as a crosslinking agent to a vinyl terminated polydimethylsiloxane in the presence of a platinum-olefin complex catalyst, as described in Karstedt, United States Patent No. 3,775,452, and curing is effected by heating the mixture.

A cured vinyl dimethylsiloxane is produced.

The above-mentioned patents are hereby incorporated by reference.

Many variations of the present invention will suggest themselves to those skilled in the art in light of the above-detailed description. All such obvious modifications are within the full intended scope of the appended claims.

## Claims

1. A trifunctional branched siloxane hydride selected from those having the general formula :
TDₓM^{H}₃
TDₓD^{H}_{y}M^{H}₃
TDₓD^{H}_{y}M₃
wherein T represents an alkyl trisiloxy, D represents a dialkylsiloxy, D^{H} represents an alkylhydrodisiloxy, M represents a trialkylsiloxy, M^{H} represents a dialkylhydrosiloxy and x and y are 1 or greater.

2. A trifunctional branched siloxane hydride as defined in Claim 1 wherein said alkyl group of the T, D, D^{H}, M and M^{H} components comprises methyl.

3. A trifunctional branched siloxane hydride as defined in Claim 1 or Claim 2 wherein x is an integer varying from about 10 to about 150.

4. A process for preparing a trifunctional branched siloxane hydride selected from those having the general formula :
TDₓM^{H}₃
TDₓD^{H}_{y}M^{H}₃
TDₓD^{H}_{y}M₃
wherein T represents an alkyl trisiloxy, D represents a dialkylsiloxy, D^{H} represents an alkylhydrosiloxy, M represents a trialkylsiloxy, M^{H} represents a dialkylhydrosiloxy, and x and y are 1 or greater, said process comprising :
a) adding a TD siloxane to a reaction vessel, wherein T and D are as above defined,
b) heating the reaction vessel to a temperature of from about 50 to about 150°C in the presence of a catalyst,
c) cooling and neutralizing the reaction mixture; and
d) recovering the trifunctional branched siloxane hydride product.

5. A process as defined in Claim 4 wherein x is an integer varying from about 10 to about 150.

6. A process as defined in Claim 4 or Claim 5 wherein a siloxane tetramer and a tetraalkyldisiloxane are also added to the reaction vessel in step (a).

7. A process as defined in any one of Claims 4 to 6 wherein said catalyst is selected from a platinum catalyst, an acid clay and sulfonic acids.

8. A process as defined in any one of Claims 4 to 7 wherein said TD siloxane comprises from about 5 to about 25 weight percent T.

9. A process as defined in any one of Claims 4 to 8 wherein said TD siloxane is prepared by the co-hydrolysis of an alkyltrichloro-silane with a dialkylchlorosilane.

10. A process as defined in any one of Claims 4 to 9 wherein said neutralizing step is carried out in the presence of a neutralizing agent.
